# FASCICULE DE BREVET EUROPEEN

(11) **EP 3 049 693 B1**
(45) Date de publication et mention de la délivrance du brevet: **15.11.2017**
(21) Numéro de dépôt: 14825272.9
(22) Date de dépôt: 24.09.2014
(51) Int. Cl.: F16H 1/46

(54) **DISPOSITIF RÉDUCTEUR DE VITESSE ANGULAIRE**
VORRICHTUNG ZUR REDUZIERUNG DER WINKELGESCHWINDIGKEIT
ANGULAR SPEED REDUCTION DEVICE

(30) Priorité: 24.09.2013 FR 1359180
(43) Date de publication de la demande: 03.08.2016
(73) Titulaire: Moteurs Alexandre, 28190 Saint-Georges-sur-Eure (FR)
(72) Inventeur: LÊ, Tiên Phu, F-28000 Chartres (FR)
(74) Mandataire: Debay, Yves
(86) Numéro de dépôt international: PCT/EP2014/070368
(87) Numéro de publication internationale: WO 2015/044200

(56) Documents cités:
- EP-A1- 0 936 382
- DE-A1- 3 619 069
- FR-A- 667 229
- GB-A- 2 175 668
- US-A1- 2008 307 913

## Description

### DOMAINE TECHNIQUE DE L'INVENTION

La présente invention concerne un dispositif mécanique permettant de générer une vitesse de rotation de sortie plus faible que la vitesse de rotation d'entrée. Plus explicitement, l'invention concerne un dispositif de réduction de vitesse de rotation.

### ARRIERE-PLAN TECHNOLOGIQUE DE L'INVENTION

Il est connu de l'art antérieur des réducteurs de vitesse de rotation modifiant le rapport de vitesse entre l'axe d'entrée et l'axe de sortie.

Il existe notamment des réducteurs de vitesse classiques, comprenant un pignon relié à l'axe d'entrée, ledit pignon engrenant une roue reliée à un axe de sortie, le diamètre intérieur de la roue étant plus important que le diamètre extérieur du pignon. Ainsi, la vitesse angulaire de la roue menée par le pignon est inférieure à la vitesse angulaire du pignon, ce dernier communiquant la vitesse de rotation de l'axe d'entrée. Cependant, sans montage complexe et couteux comportant un nombre important d'axes, de pignons et de roues, ce type de réducteurs n'offre que peu de latitude de fonctionnement, peu de rapports entre la vitesse angulaire d'entrée et la vitesse angulaire de sortie étant disponibles.

Il est également connu de l'art antérieur des réducteurs de vitesse dits planétaires. Un tel réducteur comprend au moins un pignon auquel est communiquée la vitesse angulaire d'entrée, le pignon engrenant des roues satellites dont les axes sont reliés à un plateau, les satellites engrenant à leur tour une couronne. La vitesse angulaire de sortie, réduite par l'ensemble satellites/couronne, est communiquée soit au plateau reliant les satellites soit à la couronne. Ces réducteurs planétaires sont plus silencieux et permettent d'obtenir d'avantage de rapports entre les vitesses d'entrée et de sortie que les réducteurs classiques. En revanche, ces derniers sont encombrants et couteux à réaliser.

Le brevet US 1,604,112 divulgue un réducteur de vitesse particulier, combinant des réducteurs planétaires et d'autres pièces d'engrenages. Ce réducteur comprend un axe entrainant d'une part une pluralité de satellites, qui eux même engrènent la denture intérieure d'une couronne, et d'autre part un deuxième engrenage monté sur un premier axe intermédiaire. Ce deuxième engrenage entraine un troisième engrenage sur un deuxième axe intermédiaire, ledit deuxième axe comprenant un quatrième engrenage engrenant la denture extérieure de la couronne. Le deuxième engrenage transmet le mouvement de rotation sans opérer de réduction, de sorte que le sens de rotation du deuxième axe intermédiaire soit identique au sens de rotation de l'axe menant. Cependant, ce type de réducteur est très encombrant et couteux, puisque de nombreuses pièces n'interviennent pas dans la réduction de la vitesse angulaire.

Le brevet EP 0,936,382 divulgue un dispositif de réduction de vitesse comprenant d'une part un premier élément comportant au moins un pignon et un deuxième élément comportant au moins une couronne, les deux éléments étant de même centre fixe et de rayon différent, et ayant des vitesses de rotation non nulles. Le dispositif comprend un troisième élément circulaire comportant au moins un satellite, en contact avec le/les pignons et la/les couronnes, le troisième élément voyant son centre décrire, à une vitesse déterminée, une trajectoire circulaire dont le rayon est compris entre les rayons des deux autres éléments. Ainsi, en appliquant des vitesses angulaires connues à deux éléments quelconques du réducteur on en déduit la vitesse angulaire du dernier élément, les paramètres dimensionnels de tous les éléments du dispositif étant connus. Cependant, le montage des axes dans les différents éléments et le réglage de la stabilité de la rotation des éléments les uns par rapport aux autres exigent du temps et une grande précision.

### DESCRIPTION GENERALE DE L'INVENTION

La présente invention a donc pour objet de proposer un dispositif de réduction de vitesse angulaire, permettant de pallier un ou plusieurs des inconvénients de l'art antérieur. A cet effet, l'invention propose un dispositif de réduction nécessitant peu d'étapes de montage et dont la stabilité en rotation des différents éléments le composant est améliorée.

A cet effet, l'invention concerne un dispositif de réduction de vitesse angulaire comprenant un premier élément circulaire traversant le centre d'un plateau fixe et tournant librement par rapport audit plateau à une vitesse angulaire W₁, caractérisé en ce que ce premier élément est en engrènement avec un deuxième élément comportant au moins un satellite solidaire du plateau fixe via un embout monobloc avec ledit satellite et faisant office d'axe de rotation, chaque satellite étant libre en rotation par rapport au plateau fixe et entrainé par le premier élément, les satellites étant au contact de l'intérieur d'une première couronne entrainée par le second élément à la vitesse angulaire W₂, ladite couronne et le premier élément étant concentriques, la première couronne étant rendue solidaire d'une deuxième couronne de sorte que la première couronne entraine ladite deuxième couronne à la même vitesse angulaire W₂, un troisième élément étant en engrènement avec le premier élément et la partie interne de la deuxième couronne , le centre du troisième élément étant entrainé par le premier élément et la deuxième couronne à la vitesse angulaire W_{O3} le long d'une trajectoire circulaire de rayon déterminé intermédiaire entre le rayon du premier élément et le rayon intérieur de la deuxième couronne, le troisième élément comprenant au moins un satellite monté libre en rotation dans un plateau de sortie via un embout formant un seul bloc avec le satellite et faisant office d'axe de rotation, chaque satellite étant libre en rotation autour de son axe, le troisième élément entrainant le plateau de sortie à la vitesse angulaire W₃, le plateau de sortie comportant en outre au moins un embout faisant office d'axe de sortie, cet axe et le premier élément étant concentriques, les pièces du dispositif étant insérées dans un tube de guidage positionné dans le flasque ou le bâti d'un moteur, le diamètre extérieur de la deuxième couronne et le diamètre du plateau de sortie du dispositif étant égaux et adaptés au diamètre de l'alésage du tube de guidage de sorte qu'il n'y ait pas de jeu mécanique entre d'une part la paroi interne du tube de guidage et d'autre part le plateau de sortie, le troisième élément et la deuxième couronne, le tube de guidage comprenant en outre au niveau de son autre extrémité un rebord annulaire destiné à accueillir une plaque de fixation disposée en vis-à-vis du plateau de sortie et fixée au tube de guidage via au moins une vis ou une goupille, la plaque de fixation comprenant une ouverture à travers laquelle dépasse l'embout du plateau de sortie faisant office d'axe de sortie, ledit embout étant libre en rotation par rapport à la plaque de fixation.

Selon une autre particularité, le dispositif de réduction de vitesse angulaire est caractérisé en ce que chaque embout des satellites des deuxième et troisième éléments comprend sur son extrémité un système de blocage empêchant le satellite de se désengager du plateau correspondant dans lequel ledit satellite est monté en rotation.

Selon une autre particularité, le dispositif de réduction de vitesse angulaire est caractérisé en ce que les pièces dudit dispositif sont réalisées en métal fritté ou taillées dans la masse.

Selon une autre particularité, le dispositif de réduction de vitesse angulaire est caractérisé en ce que d'une part le premier élément est constitué par l'axe du moteur dans lequel sont réalisés deux pignons, le premier pignon entrainant le deuxième élément et le deuxième pignon entrainant le troisième élément, et d'autre part le plateau fixe est solidaire du bâti du moteur.

Selon une autre particularité, le dispositif de réduction de vitesse angulaire est caractérisé en ce que d'une part le premier élément comprend un axe entrainé par le moteur, ledit axe comportant un premier pignon monté rigidement sur l'axe et entrainant le deuxième élément, l'axe comportant en outre un deuxième pignon monté rigidement sur l'axe et entrainant le troisième élément, le diamètre intérieur du premier pignon étant supérieur au diamètre extérieur du deuxième pignon, et d'autre part le plateau fixe est solidaire du bâti du moteur.

Selon une autre particularité, le dispositif de réduction de vitesse angulaire est caractérisé en ce que d'une part le premier élément comprend un axe entrainé par le moteur, ledit axe comportant un premier pignon monté rigidement sur l'axe et entrainant le deuxième élément, un deuxième pignon entrainant le troisième élément étant directement réalisé dans l'axe, et d'autre part le plateau fixe est solidaire du bâti du moteur.

Selon une autre particularité, le dispositif de réduction de vitesse angulaire est caractérisé en ce que les dentures des pignons du premier élément sont différentes.

Selon une autre particularité, le dispositif de réduction de vitesse angulaire est caractérisé en ce que le premier élément est constitué par l'axe du moteur dans lequel est réalisé un unique pignon entrainant à la fois le deuxième élément et le troisième élément.

Selon une autre particularité, le dispositif de réduction de vitesse angulaire est caractérisé en ce que les pignons, satellites et couronnes ont le même module.

Selon une autre particularité, le dispositif de réduction de vitesse angulaire est caractérisé en ce que l'axe du premier élément est un axe moteur auquel est appliqué une vitesse angulaire source W₁ destinée à être réduite.

Selon une autre particularité, le dispositif de réduction de vitesse angulaire est caractérisé en ce qu'une des deux couronnes comprend une jupe sans dentures, dans laquelle est emmanchée l'autre couronne.

Selon une autre particularité, le dispositif de réduction de vitesse angulaire est caractérisé en ce qu'une des deux couronnes est fixée à l'intérieur de la couronne comprenant une jupe, à l'aide d'au moins une goupille ou d'au moins une vis insérée parallèlement ou perpendiculairement à l'axe du premier élément.

Selon une autre particularité, le dispositif de réduction de vitesse angulaire est caractérisé en ce que les embouts faisant office d'axe des satellites du deuxième et troisième élément comprennent une gorge dans un plan perpendiculaire à l'axe de symétrie du satellite, un joint torique étant destiné à être inséré dans cette gorge de sorte que la liaison entre l'axe de chaque satellite et le plateau correspondant soit étanche tout en assurant la libre rotation dans le plateau du satellite autour de son axe.

Selon une autre particularité, le dispositif de réduction de vitesse angulaire est caractérisé en ce que le tube de guidage comprend au moins un épaulement, assurant le maintien du plateau fixe et permettant la fixation du tube de guidage sur le bâti ou le flasque du moteur à l'aide d'au moins une vis ou une goupille.

Selon une autre particularité, le dispositif de réduction de vitesse angulaire est caractérisé en ce que les pièces du dispositif ainsi que le bâti du moteur sont insérés dans le tube de guidage.

Selon une autre particularité, le dispositif de réduction de vitesse angulaire est caractérisé en ce que le plateau de sortie comprend au niveau de son autre extrémité un deuxième embout faisant office d'axe de sortie, les premier et deuxième embouts étant alignés et positionnés de part et d'autre du plateau de sortie, le deuxième embout étant destiné à être inséré dans l'axe du premier élément, ledit axe étant creux et de diamètre intérieur supérieur au diamètre du deuxième embout de sorte que ce dernier soit libre en rotation à la vitesse angulaire W_{O3}.

L'invention, avec ses caractéristiques et avantages, ressortira plus clairement à la lecture de la description faite en référence aux dessins annexés dans lesquels :
La figure 1 illustre un schéma de principe du dispositif de réduction de vitesse angulaire selon l'invention ;
La figure 2 illustre une vue en coupe du dispositif de réduction angulaire et du flasque du moteur ;
La figure 3a illustre une vue en coupe du premier élément dans un mode de réalisation ;
La figure 3b illustre une vue en coupe du premier élément dans un autre mode de réalisation ;
La figure 3c illustre une vue en coupe du premier élément dans un autre mode de réalisation ;
La figure 3d illustre une vue en coupe du premier élément dans un autre mode de réalisation ;
La figure 4 illustre une vue en coupe du plateau de sortie dans un mode de réalisation alternatif ;
La figure 5a illustre une vue en coupe d'un satellite du premier ou du troisième élément, le satellite comprenant une gorge ;
La figure 5b illustre une vue en coupe d'un satellite du premier ou du troisième élément, le satellite comprenant un joint torique inséré dans la gorge ;
La figure 6 illustre une vue en coupe d'un satellite du premier ou du troisième élément, le satellite comprenant à l'extrémité de son embout ;
La figure 7a illustre une vue de dessus d'une couronne ;
La figure 7b illustre une vue de dessus d'une couronne comprenant une jupe.

### DESCRIPTION DES MODES DE REALISATION PREFERES DE L'INVENTION

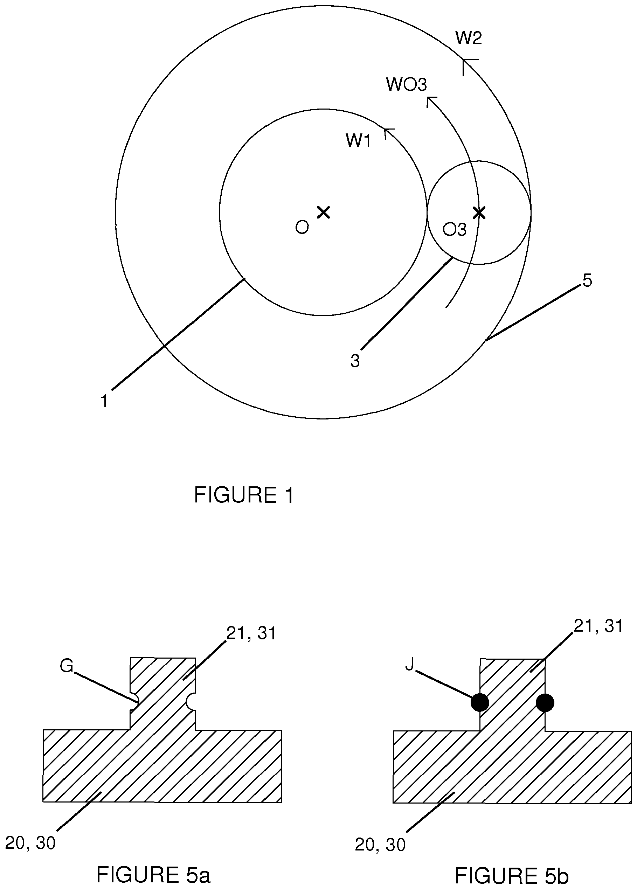

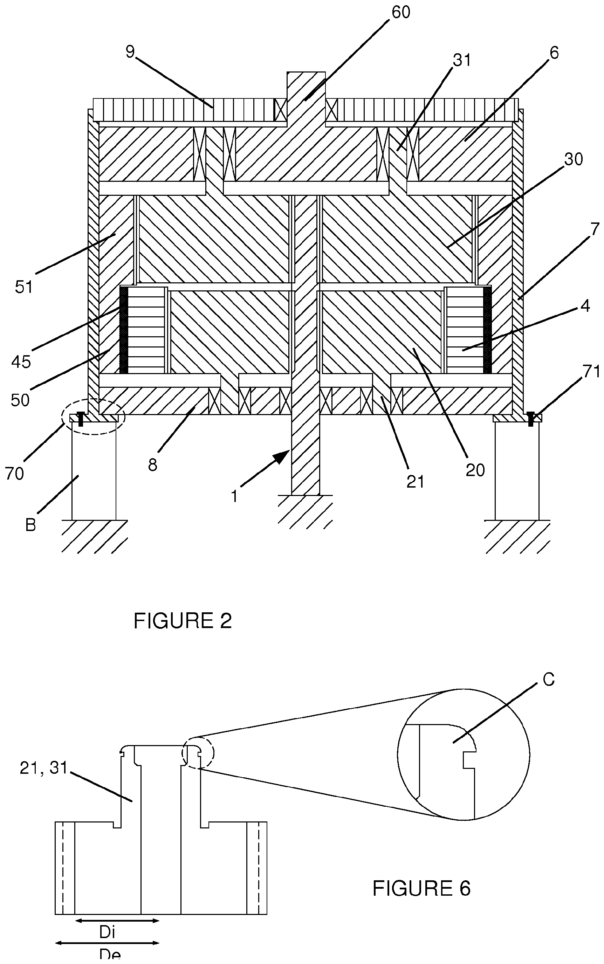

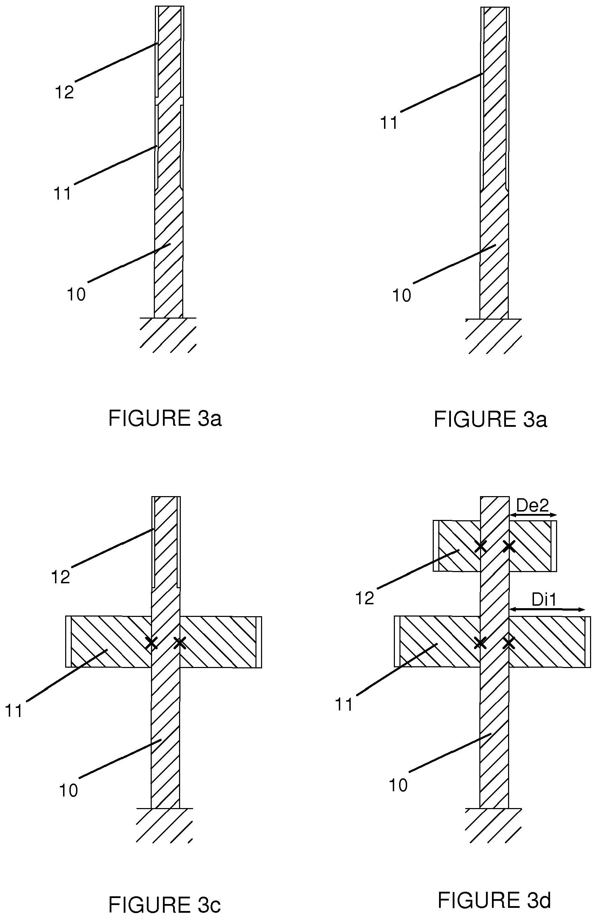

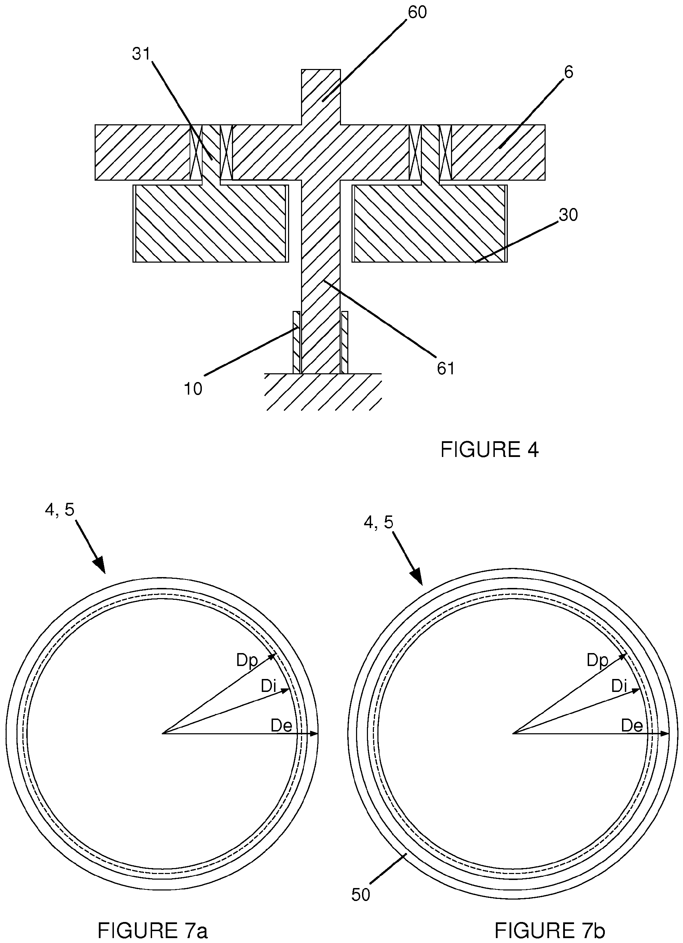

En référence aux figures 1 à 7, l'invention va maintenant être décrite.

Dans un mode de réalisation, le dispositif réducteur de vitesse angulaire selon l'invention comprend un premier élément circulaire (1) traversant un plateau fixe (8) par exemple par rapport au bâti (B) ou au flasque d'un moteur comprenant le dispositif de réduction de vitesse. Ce premier élément (1) tourne librement par rapport au plateau fixe (8), à une vitesse angulaire W₁. Ce premier élément est en engrènement avec un deuxième élément (2) comportant au moins un satellite (20), chaque satellite du deuxième élément étant libre en rotation autour de son axe. Dans un mode de réalisation, chaque satellite comprend un embout monobloc (21) avec le satellite, en métal fritté ou taillé dans la masse du satellite, l'embout faisant office d'axe de rotation du satellite. Ces satellites (20) sont solidaires du plateau fixe (8) via l'embout (21) de chaque satellite, les satellites (20) du second élément étant libre en rotation autour de leur axe respectif. Dans un mode de réalisation, chaque embout (21) comprend un système de blocage (C) empêchant le satellite (20) de se désengager du plateau fixe (8) dans lequel ledit satellite est monté en rotation. Chaque satellite du second élément est entrainé sans glissement par le premier élément (1) et tourne à une vitesse angulaire différente de la vitesse angulaire du premier élément circulaire. Dans un mode de réalisation, le premier élément comprend un axe (10) comportant au moins un pignon (11) dont les dentures engrènent les dentures des satellites (20) du second élément. Par exemple et de manière non limitative, le premier élément (1) est constitué par l'axe d'un moteur. La vitesse angulaire source W₁ est appliquée au premier élément (1), ladite vitesse étant destinée à être réduite par le dispositif selon l'invention.

Dans un mode de réalisation, les satellites (20) du second élément sont au contact de l'intérieur d'une première couronne (4), ladite couronne (4) et le premier élément (1) étant concentriques. Les satellites (20) du second élément entrainent sans glissement la première couronne (4), qui acquière une vitesse de rotation W₂. Dans un mode de réalisation, les dentures des satellites (20) du second élément engrènent les dentures présentes à l'intérieur de la première couronne (4).

Dans un mode de réalisation, la première couronne (4) est rendue solidaire d'une deuxième couronne (5) de sorte que la première couronne (4) soit fixe par rapport à la deuxième couronne (5), la première couronne (4) entrainant ainsi la deuxième couronne (5) en rotation à la même vitesse angulaire W₂. Dans un mode de réalisation, une des deux couronnes (4, 5) comprend une jupe (50) sans dentures dans laquelle est emmanchée l'autre couronne (4, 5). Dans un mode de réalisation, une des deux couronnes est fixée à l'intérieur de la couronne comprenant une jupe (50), par exemple et de manière non limitative à l'aide d'au moins une goupille (45) ou d'au moins une vis, insérée parallèlement ou perpendiculairement à l'axe de rotation (10) du premier élément (1). De manière préférentielle, une des deux couronnes est fixée à l'intérieur de la couronne comprenant une jupe (50), par exemple et de manière non limitative à l'aide de deux goupilles (45) ou de deux vis, insérées parallèlement ou perpendiculairement à l'axe de rotation (10) du premier élément (1). Ainsi, le mode de fixation d'une couronne par rapport à l'autre à travers la jupe (50) permet de réduire l'encombrement du dispositif selon l'invention. Dans un mode de réalisation préférentiel, les dentures des deux couronnes (4, 5) sont différentes. D'autre part, les couronnes étant différentes, il est possible de positionner les couronnes (4, 5) de n'importe quelle manière l'une par rapport à l'autre. En d'autres termes, en regardant les deux couronnes concentriques selon leur axe de rotation (O), il est possible de positionner les dentures de la première couronne par rapport à la deuxième de n'importe quelle manière, par exemple et de manière non limitative de sorte que les dentures soient alignées ou non, ou par exemple de sorte que chaque pointe de la denture de la première couronne coïncide avec chaque creux de la denture de la deuxième couronne. Ainsi, l'utilisation de deux couronnes concentriques différentes permet d'obtenir, avec seulement deux étages de réduction, c'est-à-dire les deux couronnes concentriques (4, 5), une très grande variété de rapports de réduction, des plus faibles aux plus élevés, par exemple et de manière non limitative bien au-delà de 10000, voire 100000, tout en ayant un encombrement très réduit du dispositif de réduction. D'autre part, le fait de n'utiliser que deux étages de réduction réduit considérablement les pertes liées au frottement des dentures des engrenages, qui sont dans les conditions de l'invention seulement de l'ordre de 4 à 5 % de pertes

Dans un mode de réalisation, le dispositif de réduction de vitesse angulaire comprend un troisième élément (3) en engrènement avec le premier élément (1) et la partie interne (51) de la deuxième couronne (5), par exemple qui n'est pas au contact de la première couronne (4). Le centre (03) de ce troisième élément, qui n'est pas concentrique avec les couronnes et le premier élément, est entrainé par le premier élément (1) et par les dentures de la deuxième couronne (5) à une vitesse W_{O3}, le long d'une trajectoire circulaire de rayon déterminé (R3) intermédiaire entre le rayon (R1) du premier élément (1) et le rayon (R2) de la deuxième couronne (5). Les relations mathématiques liant d'une part les rayons et d'autre part les vitesses de rotations des différents éléments sont décrits dans le brevet européen ayant pour numéro de publication EP 0,936,382.

Dans un mode de réalisation, le troisième élément comprend au moins un satellite (30), ledit satellite comprenant un embout (31) formant un seul bloc avec le satellite (30) et faisant office d'axe de rotation dudit satellite. Comme pour les satellites (20) du deuxième élément, l'axe d'un satellite (30) du troisième élément est donc fixe par rapport au satellite lui-même. Chaque satellite du troisième élément est monté libre en rotation, via son embout (31), dans un plateau de sortie (6) de sorte que les satellites du troisième élément entrainent le plateau de sortie en rotation à la vitesse angulaire W_{O3}. Dans un mode de réalisation, chaque embout (31) comprend un système de blocage (C) empêchant le satellite (30) de se désengager du plateau de sortie (6) dans lequel ledit satellite est monté en rotation. Dans un mode de réalisation, le plateau de sortie comprend un embout (60) faisant office d'axe de sortie, cet axe et le premier élément circulaire (1) étant concentriques.

Dans un mode de réalisation alternatif, le plateau de sortie (6) comprend un deuxième embout (61) faisant office de second axe de sortie. Les deux embouts (60, 61) du plateau de sortie (6) sont concentriques, préférentiellement de même rayon, et positionnés de part et d'autre du plateau de sortie. Le deuxième embout (61) est destiné à être inséré dans l'axe (10) du premier élément (1), ledit axe étant dans ce cas creux et de rayon interne supérieur au rayon du deuxième embout (61) faisant office de deuxième axe de sortie, de sorte que ce deuxième axe de sortie soit libre en rotation à la vitesse angulaire W_{O3}.

Dans un mode de réalisation, les embouts (21, 31) des satellites (20, 30) des deuxième et troisième éléments comprennent une gorge (G) située dans un plan perpendiculaire à l'axe de symétrie du satellite, la gorge (G) permettant le placement et le maintien d'un joint torique (J), par exemple ayant des propriétés élastiques. La présence d'un tel joint sur l'embout (21, 31) faisant office d'axe de chaque satellite (20, 30) permet d'assurer l'étanchéité de la liaison entre l'embout de chaque satellite et le plateau (6, 8) correspondant, tout en assurant la libre rotation de chaque satellite autour de son axe.

Dans un mode de réalisation, le premier élément (1) comprend un axe comportant deux pignons (11, 12), le premier pignon (11) entrainant le deuxième élément et le deuxième pignon (12) entrainant le troisième élément. Les pignons comportent des dentures engrenant les satellites des deuxième et troisième éléments du dispositif. Dans un mode de réalisation, les deux pignons ont le même nombre de dents. Dans un mode de réalisation alternatif, les deux pignons ont le même nombre de dents et le même module. Dans un mode de réalisation alternatif, les dentures des deux pignons (11, 12) sont différentes de manière à atteindre des rapports de réduction élevés, par exemple et de manière non limitative supérieurs à 4000. Il est important de noter que l'invention peut atteindre des rapports de réduction bien plus élevés en jouant d'une part sur les dentures des pignons (11, 12), satellites (20, 30) et couronnes (4, 5), et d'autre part sur les dimensions des pièces du dispositif. Ainsi, n'importe quel rapport de réduction peut être atteint par l'invention.

Dans un mode de réalisation, les dentures des pignons (11, 12) du premier élément sont directement réalisées dans l'axe. Par exemple et de manière non limitative, les dentures des deux pignons (11, 12) sont directement taillées dans l'axe. En particulier dans ce mode de réalisation, le premier élément (1) est constitué par l'axe du moteur. Lorsque les nombres de dents et modules du premier et du deuxième pignon sont identiques, il est alors possible de réaliser un seul pignon destiné à engrener à la fois les satellites du deuxième élément et les satellites du troisième élément. Cet unique pignon (11) se comporte donc comme deux pignons entrainant respectivement les deuxième et troisième éléments, et ayant le même nombre de dents et le même module.

Dans un mode de réalisation alternatif, le premier pignon (11) du premier élément (1), destiné à entrainer le deuxième élément, est monté rigidement sur l'axe (10) du premier élément, tandis que les dentures du deuxième pignon (12) entrainant le troisième élément sont directement réalisées dans l'axe du premier élément (1). Par exemple et de manière non limitative, les dentures sont directement taillées dans l'axe.

Dans un mode de réalisation alternatif, les deux pignons (11, 12) sont montés rigidement sur l'axe (10) du premier élément, le diamètre intérieur (Di₁) du premier pignon (11) entrainant le deuxième élément étant supérieur au diamètre extérieur (De₂) du deuxième pignon (12) entrainant le troisième élément. On entend par diamètre intérieur d'un pignon le diamètre du pignon sans tenir compte de ses dentures, et par diamètre extérieur d'un pignon le diamètre du pignon incluant ses dentures. A noter que le diamètre primitif d'un engrenage (Dp), bien connu de l'homme du métier, est un diamètre virtuel compris entre le diamètre intérieur (Di) et le diamètre extérieur (De) de l'engrenage.

Dans un mode de réalisation, les satellites (20, 30) des deuxième et troisième éléments, les couronnes (4, 5) et les pignons (11, 12) du premier élément sont de même module.

Il est important de noter que les différents éléments et couronnes peuvent avoir des mouvements de rotation dans un sens ou dans l'autre. Les différents éléments sont bloqués en translation les uns par rapport aux autres et par rapport à un repère fixe, par exemple le bâti (B) du moteur comprenant le dispositif réducteur de vitesse angulaire.

Dans un mode de réalisation, les différents éléments et les couronnes du dispositif de réduction de vitesse angulaire sont insérés dans un tube de guidage (7), ledit tube de guidage étant lui-même rendu solidaire du flasque ou du bâti (B) du moteur. Dans un mode de réalisation, le diamètre extérieur de la couronne comprenant une jupe, par exemple et de manière non limitative la deuxième couronne (5), et le diamètre du plateau de sortie (6) sont égaux, et adaptés au diamètre de l'alésage du tube de guidage (7) afin d'éviter tout jeu mécanique entre d'une part la paroi interne du tube de guidage (7) et d'autre part la deuxième couronne (5), le troisième élément et le plateau de sortie (6). L'adaptation du diamètre des pièces, afin d'éviter les jeux mécaniques entre elles, est parfaitement connue de l'homme du métier, le diamètre de l'alésage étant supérieur au diamètre extérieur de la deuxième couronne et au diamètre du plateau : par exemple et de manière non limitative, le diamètre de l'alésage du tube de guidage est plus grand de quelques centièmes de millimètre, par exemple entre 1 centième et 2 centièmes de millimètre, que le diamètre du plateau de sortie et le diamètre extérieur de la deuxième couronne. Dans un mode de réalisation, les pièces (1, 2, 3, 4, 5, 6, 8, 9) du dispositif selon l'invention ainsi que le bâti (B) du moteur sont insérés dans le tube de guidage (7).

Dans un mode de réalisation, le tube de guidage (7) comprend à une extrémité un double épaulement (70) assurant le maintien du dispositif de réduction de vitesse angulaire au bâti ou au flasque (B) du moteur. Le premier épaulement est destiné à maintenir le plateau fixe (8) solidaire du deuxième élément. Le deuxième épaulement est destiné à assuré la fixation du tube de guidage (7) au flasque ou au bâti (B) du moteur, par exemple et de façon non limitative à l'aide d'au moins une goupille (71) ou d'au moins une vis. Dans un mode de réalisation alternatif, le tube de guidage est emmanché en force dans une gorge usinée dans le flasque ou le bâti du moteur.

Dans un mode de réalisation, le tube de guidage (7) comprend, sur son autre extrémité, des moyens destinés à accueillir une plaque de fixation (9) disposée en vis-à-vis du plateau de sortie (6). Par exemple et de manière non limitative, un rebord annulaire usiné dans l'extrémité du tube de guidage (7) accueille cette plaque de fixation (9), ladite plaque étant fixée au tube de guidage via par exemple une vis ou une goupille. D'autre part, la plaque de fixation comprend en son centre une ouverture traversée par l'embout (60) du plateau de sortie faisant office d'axe de sortie, le diamètre de l'ouverture de la plaque de fixation étant supérieur au diamètre de l'embout du plateau de sortie de sorte que ledit embout soit libre en rotation par rapport à la plaque de fixation.

Dans un mode de réalisation, les pièces du dispositif selon l'invention sont réalisées en métal fritté. Dans un mode de réalisation alternatif, les pièces du dispositif selon l'invention sont taillées dans la masse.

La présente demande décrit diverses caractéristiques techniques et avantages en référence aux figures et/ou à divers modes de réalisation. L'homme de métier comprendra que les caractéristiques techniques d'un mode de réalisation donné peuvent en fait être combinées avec des caractéristiques d'un autre mode de réalisation à moins que l'inverse ne soit explicitement mentionné ou qu'il ne soit évident que ces caractéristiques sont incompatibles. De plus, les caractéristiques techniques décrites dans un mode de réalisation donné peuvent être isolées des autres caractéristiques de ce mode à moins que l'inverse ne soit explicitement mentionné.

Il doit être évident pour les personnes versées dans l'art que la présente invention permet des modes de réalisation sous de nombreuses autres formes spécifiques sans l'éloigner du domaine défini par la portée des revendications jointes, et l'invention ne doit pas être limitée aux détails donnés ci-dessus.

## Revendications

1. Dispositif de réduction de vitesse angulaire comprenant un premier élément (1) circulaire d'un plateau fixe (8) et en engrènement avec un deuxième élément (2) comportant au moins un satellite (20) et étant au contact de l'intérieur d'une première couronne (4), un troisième élément (3) comportant au moins un satellite (30) et étant en engrènement avec le premier élément (1) et au contact d'une deuxième couronne (5), dans lequel
- le premier élément (1) est traversant le centre du plateau fixe (8) et tournant librement par rapport audit plateau à une vitesse angulaire W1,
- le deuxième élément (2) est solidaire du plateau fixe (8) via un embout monobloc (21) avec ledit satellite (20) et faisant office d'axe de rotation, chaque satellite (20) étant libre en rotation par rapport au plateau fixe (8) et entrainé par le premier élément (1), les satellites (20) étant entrainée par le second élément (2) à la vitesse angulaire W₂, ladite couronne (4) et le premier élément (1) étant concentriques, la première couronne (4) étant rendue solidaire d'une deuxième couronne (5) de sorte que la première couronne (4) entraine ladite deuxième couronne (5) à la même vitesse angulaire W₂, une des deux couronnes (4, 5) comprenant une jupe (50) sans dentures dans laquelle est emmanchée l'autre couronne (4),
- le troisième élément (3) étant en engrènement avec une partie interne (51) de la deuxième couronne (5), le centre du troisième élément (3) étant entrainé par le premier élément et la deuxième couronne à la vitesse angulaire W_{O3} le long d'une trajectoire circulaire de rayon déterminé (R3) intermédiaire entre le rayon (R1) du premier élément et le rayon intérieur (R2) de la deuxième couronne, ladite satellite (30) étant montée libre en rotation dans un plateau de sortie (6) via un embout (31) formant un seul bloc avec le satellite (30) et faisant office d'axe de rotation, chaque satellite étant libre en rotation autour de son axe, le troisième élément (3) entrainant le plateau de sortie (6) à la vitesse angulaire W₃,
- le plateau de sortie comportant en outre au moins un embout (60) faisant office d'axe de sortie, cet axe et le premier élément (1) étant concentriques, les pièces (1, 2, 3, 4, 5, 6, 8, 9) du dispositif étant insérées dans un tube de guidage (7) positionné dans le flasque (B) ou le bâti d'un moteur, le diamètre extérieur de la deuxième couronne (5) et le diamètre du plateau de sortie (6) du dispositif étant égaux et adaptés au diamètre de l'alésage du tube de guidage (7) de sorte qu'il n'y ait pas de jeu mécanique entre d'une part la paroi interne du tube de guidage (7) et d'autre part le plateau de sortie (6), le troisième élément (3) et la deuxième couronne (5),
- le tube de guidage (7) comprenant en outre au niveau de son autre extrémité un rebord annulaire destiné à accueillir une plaque de fixation (9) disposée en vis-à-vis du plateau de sortie (6) et fixée au tube de guidage (7) via au moins une vis ou une goupille, la plaque de fixation (9) comprenant une ouverture à travers laquelle dépasse l'embout (60) du plateau de sortie (6) faisant office d'axe de sortie, ledit embout (60) étant libre en rotation par rapport à la plaque de fixation (9).

2. Dispositif de réduction de vitesse angulaire selon la revendication précédente, **caractérisé en ce que** chaque embout (21, 31) des satellites (20, 30) des deuxième (2) et troisième (3) éléments comprend sur son extrémité un système de blocage (C) empêchant le satellite (20, 30) de se désengager du plateau (6, 8) correspondant dans lequel ledit satellite (20, 30) est monté en rotation.

3. Dispositif de réduction de vitesse angulaire selon l'une quelconque des revendications précédentes, **caractérisé en ce que** les pièces (1, 2, 3, 4, 5, 6, 8, 9) du dispositif sont réalisées en métal fritté ou taillées dans la masse.

4. Dispositif de réduction de vitesse angulaire selon l'une quelconque des revendications précédentes, **caractérisé en ce que** d'une part le premier élément (1) est constitué par l'axe du moteur dans lequel sont réalisés deux pignons (11, 12), le premier pignon (11) entrainant le deuxième élément (2) et le deuxième pignon (12) entrainant le troisième élément (3), et d'autre part le plateau fixe (8) est solidaire du bâti (B) du moteur.

5. Dispositif de réduction de vitesse angulaire selon l'une quelconque des revendications 1 à 3, **caractérisé en ce que** d'une part le premier élément (1) comprend un axe (10) entrainé par le moteur, ledit axe comportant un premier pignon (11) monté rigidement sur l'axe et entrainant le deuxième élément (2), l'axe (10) comportant en outre un deuxième pignon (12) monté rigidement sur l'axe et entrainant le troisième élément (3), le diamètre intérieur (Dᵢ₁) du premier pignon (11) étant supérieur au diamètre extérieur (Dₑ₂) du deuxième pignon (12), et d'autre part le plateau fixe (8) est solidaire du bâti (B) du moteur.

6. Dispositif de réduction de vitesse angulaire selon la revendication 1, **caractérisé en ce que** d'une part le premier élément (1) comprend un axe (10) entrainé par le moteur, ledit axe comportant un premier pignon (11) monté rigidement sur l'axe et entrainant le deuxième élément (2), un deuxième pignon (12) entrainant le troisième élément (3) étant directement réalisé dans l'axe (10), et d'autre part le plateau fixe (8) est solidaire du bâti (B) du moteur.

7. Dispositif de réduction de vitesse angulaire selon l'une quelconque des revendications précédentes, **caractérisé en ce que** les dentures des pignons (11, 12) du premier élément (1) sont différentes.

8. Dispositif de réduction de vitesse angulaire selon l'une quelconque des revendications 1 à 4, **caractérisé en ce que** le premier élément (1) est constitué par l'axe du moteur dans lequel est réalisé un unique pignon (11) entrainant à la fois le deuxième élément (2) et le troisième élément (3).

9. Dispositif de réduction de vitesse angulaire selon les revendications 1 à 6 et 8, **caractérisé en ce que** les pignons (11, 12), satellites (20, 30) et couronnes (4, 5) ont le même module.

10. Dispositif de réduction de vitesse angulaire selon l'une quelconque des revendications précédentes, **caractérisé en ce que** les dentures des deux couronnes (4, 5) sont différentes.

11. Dispositif de réduction de vitesse angulaire selon l'une quelconque des revendications précédentes, caractérisé en qu'une des deux couronnes (4, 5) est fixée à l'intérieur de la couronne (4, 5) comprenant une jupe, à l'aide d'au moins une goupille (45) ou d'au moins une vis insérée parallèlement ou perpendiculairement à l'axe (10) du premier élément (1).

12. Dispositif de réduction de vitesse angulaire selon l'une quelconque des revendications précédentes, **caractérisé en ce que** les embouts (21, 31) faisant office d'axe des satellites (20, 30) du deuxième (2) et troisième (3) élément comprennent une gorge (G) dans un plan perpendiculaire à l'axe de symétrie du satellite, un joint torique (J) étant destiné à être inséré dans cette gorge de sorte que la liaison entre l'axe (21, 31) de chaque satellite (20, 30) et le plateau (8, 9) correspondant soit étanche tout en assurant la libre rotation dans le plateau du satellite autour de son axe.

13. Dispositif de réduction de vitesse angulaire selon l'une quelconque des revendications précédentes, **caractérisé en ce que** le tube de guidage (7) comprend à une extrémité au moins un épaulement (70), assurant le maintien du plateau fixe (8) et permettant la fixation du tube de guidage (7) sur le bâti (B) ou le flasque du moteur à l'aide d'au moins une vis ou une goupille (71).

14. Dispositif réduction de vitesse angulaire selon l'une quelconque des revendications précédentes, **caractérisé en ce que** les pièces (1, 2, 3, 4, 5, 6, 8, 9) du dispositif ainsi que le bâti (B) du moteur sont insérés dans le tube de guidage (7).

15. Dispositif de réduction de vitesse angulaire selon l'une quelconque des revendications précédentes, **caractérisé en ce que** le plateau de sortie (6) comprend un deuxième embout (61) faisant office d'axe de sortie, les premier et deuxième embouts étant alignés et positionnés de part et d'autre du plateau de sortie (6), le deuxième embout (61) étant destiné à être inséré dans l'axe (10) du premier élément (1), ledit axe étant creux et de diamètre intérieur supérieur au diamètre du deuxième embout (61) de sorte que ce dernier soit libre en rotation à la vitesse angulaire W_{O3}.

## Patentansprüche

1. Vorrichtung zum Reduzieren von Winkelgeschwindigkeit, umfassend ein erstes kreisförmiges Element (1) einer festen Platte (8) und im Eingriff mit einem zweiten Element (2), das wenigstens einen Satelliten (20) umfasst und mit dem Innern eines ersten Kranzes (4) in Kontakt ist, ein drittes Element (3), das wenigstens einen Satelliten (30) umfasst und mit dem ersten Element (1) in Eingriff und mit einem zweiten Kranz (5) in Kontakt ist, wobei
- das erste Element (1) durch die Mitte der festen Platte (8) verläuft und frei mit Bezug auf die Platte mit einer Winkelgeschwindigkeit W1 rotiert,
- das zweite Element (2) mit der festen Platte (8) über ein Monoblock-Ansatzstück (21) mit dem genannten Satelliten (20) einstückig ausgebildet ist und als Rotationsachse dient, wobei jeder Satellit (20) frei mit Bezug auf die feste Platte (8) rotieren kann und vom ersten Element (1) angetrieben wird, wobei die Satelliten (20) durch das zweite Element (2) mit der Winkelgeschwindigkeit W₂ angetrieben werden, wobei der genannte Kranz (4) und das erste Element (1) konzentrisch sind, wobei der erste Kranz (4) einstückig mit einem zweiten Kranz (5) gemacht wird, so dass der erste Kranz (4) den zweiten Kranz (5) mit derselben Winkelgeschwindigkeit W₂ antreibt, wobei einer der beiden Kränze (4, 5) eine Schürze (50) ohne Verzahnung umfasst, in die der andere Kranz (4) eingesteckt wird,
- wobei das dritte Element (3) mit einem Innenteil (51) des zweiten Kranzes (5) in Eingriff ist, wobei die Mitte des dritten Elements (3) durch das erste Element und den zweiten Kranz mit der Winkelgeschwindigkeit W_{O3} über eine kreisförmige Bahn mit einem bestimmten Radius (R3) zwischen dem Radius (R1) des ersten Elements und dem Innenradius (R2) des zweiten Kranzes angetrieben wird, wobei der genannte Satellit (30) frei drehbar in einer Ausgangsplatte (6) über ein Ansatzstück (31) montiert ist, das aus einem Block mit dem Satelliten (30) gebildet ist und als Rotationsachse dient, wobei jeder Satellit frei um seine Achse rotieren kann, wobei das dritte Element (3) die Ausgangsplatte (6) mit der Winkelgeschwindigkeit W₃ antreibt,
- wobei die Ausgangsplatte ferner wenigstens ein Ansatzstück (60) umfasst, das als Ausgangsachse dient, wobei diese Achse und das erste Element (1) konzentrisch sind, wobei die Teile (1, 2, 3, 4, 5, 6, 8, 9) der Vorrichtung in eine Führungshülse (7) eingeführt werden, die in dem Flansch (B) oder dem Gehäuse eines Motors positioniert ist, wobei der Außendurchmesser des zweiten Kranzes (4) und der Durchmesser der Ausgangsplatte (6) der Vorrichtung gleich und an den Durchmesser der Bohrung der Führungshülse (7) angepasst sind, so dass es kein mechanisches Spiel zwischen einerseits der Innenwand der Führungshülse (7) und andererseits der Ausgangsplatte (6), dem dritten Element (3) und dem zweiten Kranz (5) gibt,
- wobei die Führungshülse (7) ferner an ihrem anderen Ende einen ringförmigen Rand zum Aufnehmen einer Befestigungsplatte (9) umfasst, die gegenüber der Ausgangsplatte (6) angeordnet und an der Führungshülse (7) über wenigstens eine Schraube oder einen Stift befestigt ist, wobei die Befestigungsplatte (9) eine Öffnung umfasst, durch die das Ansatzstück (60) der Ausgangsplatte (6) passiert, das als Ausgangsachse dient, wobei das genannte Ansatzstück (60) frei mit Bezug auf die Befestigungsplatte (9) drehen kann.

2. Vorrichtung zum Reduzieren von Winkelgeschwindigkeit nach dem vorherigen Anspruch, **dadurch gekennzeichnet, dass** jedes Ansatzstück (21, 31) der Satelliten (20, 30) des zweiten (2) und dritten (3) Elements an seinem Ende ein Arretiersystem (C) umfasst, das verhindert, dass sich der Satellit (20, 30) von der entsprechenden Platte (6) löst, in der der Satellit (20, 30) in Rotation montiert ist.

3. Vorrichtung zum Reduzieren von Winkelgeschwindigkeit nach einem der vorherigen Ansprüche, **dadurch gekennzeichnet, dass** die Teile (1, 2, 3, 4, 5, 6, 8, 9) der Vorrichtung aus gesintertem oder in die Masse geschnittenem Metall realisiert sind.

4. Vorrichtung zum Reduzieren von Winkelgeschwindigkeit nach einem der vorherigen Ansprüche, **dadurch gekennzeichnet, dass** einerseits das erste Element (1) von der Achse des Motors gebildet wird, in dem zwei Ritzel (11, 12) realisiert sind, wobei das erste Ritzel (11) das zweite Element (2) antreibt und das zweite Ritzel (12) das dritte Element (3) antreibt, und andererseits die feste Platte (8) einstückig mit dem Gehäuse (B) des Motors ist.

5. Vorrichtung zum Reduzieren von Winkelgeschwindigkeit nach einem der Ansprüche 1 bis 3, **dadurch gekennzeichnet, dass** einerseits das erste Element (1) eine vom Motor angetriebene Achse (10) umfasst, wobei die Achse ein erstes Ritzel (11) umfasst, das starr an der Achse montiert ist und das zweite Element (2) antreibt, wobei die Achse (10) ein zweites Ritzel (12) umfasst, das starr an der Achse montiert ist und das dritte Element (3) antreibt, wobei der Innendurchmesser (Dᵢ₁) des ersten Ritzels (11) größer ist als der Außendurchmesser (Dₑ₂) des zweiten Ritzels (12), und andererseits die feste Platte (8) einstückig mit dem Gehäuse (B) des Motors ist.

6. Vorrichtung zum Reduzieren von Winkelgeschwindigkeit nach Anspruch 1, **dadurch gekennzeichnet, dass** einerseits das erste Element (1) eine vom Motor angetriebene Achse (10) umfasst, wobei die genannte Achse ein erstes Ritzel (11) umfasst, das starr an der Achse montiert ist und das zweite Element (2) antreibt, wobei ein das dritte Element (3) antreibendes zweites Ritzel (12) direkt in der Achse (10) realisiert ist, und andererseits die feste Platte (8) einstückig mit dem Gehäuse (B) des Motors ist.

7. Vorrichtung zum Reduzieren von Winkelgeschwindigkeit nach einem der vorherigen Ansprüche, **dadurch gekennzeichnet, dass** die Verzahnungen der Ritzel (11, 12) des ersten Elements (1) unterschiedlich sind.

8. Vorrichtung zum Reduzieren von Winkelgeschwindigkeit nach einem der Ansprüche 1 bis 4, **dadurch gekennzeichnet, dass** das erste Element (1) von der Achse des Motors gebildet wird, in dem ein einziges Ritzel (11) realisiert ist, das gleichzeitig das zweite Element (2) und das dritte Element (3) antreibt.

9. Vorrichtung zum Reduzieren von Winkelgeschwindigkeit nach einem der Ansprüche 1 bis 6 und 8, **dadurch gekennzeichnet, dass** die Ritzel (11, 12), Satelliten (20, 30) und Kränze (4, 5) dasselbe Modul haben.

10. Vorrichtung zum Reduzieren von Winkelgeschwindigkeit nach einem der vorherigen Ansprüche, **dadurch gekennzeichnet, dass** die Verzahnungen der zwei Kränze (4, 5) unterschiedlich sind.

11. Vorrichtung zum Reduzieren von Winkelgeschwindigkeit nach einem der vorherigen Ansprüche, **dadurch gekennzeichnet, dass** einer der beiden Kränze (4, 5) im Innern des eine Schürze umfassenden Kranzes (4, 5) mit Hilfe von wenigstens einem Stift (45) oder wenigstens einer Schraube befestigt ist, der/die parallel oder lotrecht zur Achse (10) des ersten Elements (1) eingeführt wird.

12. Vorrichtung zum Reduzieren von Winkelgeschwindigkeit nach einem der vorherigen Ansprüche, **dadurch gekennzeichnet, dass** die als Achse der Satelliten (20, 30) des zweiten (2) und dritten (3) Elements dienenden Ansatzstücke (21, 31) eine Auskehlung (G) in einer Ebene lotrecht zur Symmetrieachse des Satelliten umfassen, wobei eine O-Ringdichtung (J) zum Einführen in diese Auskehlung bestimmt ist, so dass die Verbindung zwischen der Achse (21, 31) jedes Satelliten (20, 30) und der entsprechenden Platte (8, 9) unter Gewährleistung der freien Rotation des Satelliten in der Platte um seine Achse dicht ist.

13. Vorrichtung zum Reduzieren von Winkelgeschwindigkeit nach einem der vorherigen Ansprüche, **dadurch gekennzeichnet, dass** die Führungshülse (7) an einem Ende wenigstens eine Schulter (70) umfasst, die das Halten der festen Platte (8) gewährleistet und das Befestigen der Führungshülse (7) an dem Gehäuse (B) oder dem Flansch des Motors mit Hilfe von wenigstens einer Schraube oder einem Stift (71) zulässt.

14. Vorrichtung zum Reduzieren von Winkelgeschwindigkeit nach einem der vorherigen Ansprüche, **dadurch gekennzeichnet, dass** die Teile (1, 2, 3, 4, 5, 6, 8, 9) der Vorrichtung sowie das Gehäuse (B) des Motors in die Führungshülse (7) eingeführt werden.

15. Vorrichtung zum Reduzieren von Winkelgeschwindigkeit nach einem der vorherigen Ansprüche, **dadurch gekennzeichnet, dass** die Ausgangsplatte (6) ein zweites Ansatzstück (61) umfasst, das als Ausgangsachse dient, wobei das erste und das zweite Ansatzstück ausgerichtet und auf beiden Seiten der Ausgangsplatte (6) positioniert sind, wobei das zweite Ansatzstück (61) zum Einführen in die Achse (10) des ersten Elements (1) bestimmt ist, wobei die genannte Achse hohl ist und einen Innendurchmesser hat, der größer ist als der Durchmesser des zweiten Ansatzstücks (61), so dass Letzteres frei mit der Winkelgeschwindigkeit W_{O3} rotieren kann.

## Claims

1. Angular speed reduction device comprising a first circular element (1) of a fixed plate (8) and meshing with a second element (2) comprising at least one planetary gear (20) and being in contact with the inside of a first ring gear (4), a third element (3) comprising at least one planetary gear (30) and meshing with the first element (1) and in contact with a second ring gear (5), in which
- the first element (1) traverses the centre of the fixed plate (8) and rotates freely relative to said plate at an angular speed W1,
- the second element (2) is rigidly connected to the fixed plate (8) via an end piece (21) integral with said planetary gear (20) and acting as the axis of rotation, each planetary gear (20) being freely rotatable relative to the fixed plate (8) and driven by the first element (1), the planetary gears (20) being driven by the second element (2) at the angular speed W₂, said ring gear (4) and the first element (1) being concentric, the first ring gear (4) being rigidly connected to a second ring gear (5) so that the first ring gear (4) drives said second ring gear (5) at the same angular speed W₂, one of the two ring gears (4, 5) comprising a skirt (50) without teeth in which the other ring gear (4) is fitted,
- the third element (3) meshing with an inner part (51) of the second ring gear (5), the centre of the third element (3) being driven by the first element and the second ring gear at the angular speed W_{O3} along a circular trajectory of a given radius (R3) intermediate between the radius (R1) of the first element and the inner radius (R2) of the second ring gear, said planetary gear (30) being mounted so as to be freely rotatable in an output plate (6) via an end piece (31) integral with the planetary gear (30) and acting as the axis of rotation, each planetary gear being freely rotatable about its axis, the third element (3) driving the output plate (6) at the angular speed W₃,
- the output plate further comprising at least one end piece (60) acting as the output axis, this axis and the first element (1) being concentric, the components (1, 2, 3, 4, 5, 6, 8, 9) of the device being inserted in a guide tube (7) positioned in the flange (B) or the frame of an engine, the outside diameter of the second ring gear (5) and the diameter of the output plate (6) of the device being equal and adapted to the diameter of the bore of the guide tube (7) so that there is no mechanical play between on the one hand the inner wall of the guide tube (7) and on the other hand the output plate (6), the third element (3) and the second ring gear (5),
- the guide tube (7) further comprising at the level of its outer end an annular rim designed to receive a mounting plate (9) disposed opposite the output plate (6) and fixed to the guide tube (7) via a least one screw or pin, the mounting plate (9) comprising an opening through which the end piece (60) of the output plate (6) acting as the output axis protrudes, said end piece (60) being freely rotatable relative to the mounting plate (9).

2. Angular speed reduction device according to the preceding claim, **characterised in that** each end piece (21, 31) of the planetary gears (20, 30) of the second (2) and third (3) elements comprises at its end a locking system (C) preventing the planetary gear (20, 30) from disengaging from the corresponding plate (6, 8) in which said planetary gear (20, 30) is mounted rotatably.

3. Angular speed reduction device according to any one of the preceding claims, **characterised in that** the components (1, 2, 3, 4, 5, 6, 8, 9) of the device are made of sintered metal or cut from a block.

4. Angular speed reduction device according to any one of the preceding claims, **characterised in that** on the one hand the first element (1) consists of the engine shaft in which are formed two pinions (11, 12), the first pinion (11) driving the second element (2) and the second pinion (12) driving the third element (3), and on the other hand the fixed plate (8) is rigidly connected to the frame (B) of the engine.

5. Angular speed reduction device according to any one of claims 1 to 3, **characterised in that** on the one hand the first element (1) comprises a shaft (10) driven by the engine, said shaft comprising a first pinion (11) mounted rigidly on the shaft and driving the second element (2), the shaft (10) further comprising a second pinion (12) mounted rigidly on the shaft and driving the third element (3), the inside diameter (Dᵢ₁) of the first pinion (11) being greater than the outside diameter (Dₑ₂) of the second pinion (12), and on the other hand the fixed plate (8) is rigidly connected to the frame (B) of the engine.

6. Angular speed reduction device according to claim 1, **characterised in that** on the one hand the first element (1) comprises a shaft (10) driven by the engine, said shaft comprising a first pinion (11) mounted rigidly on the shaft and driving the second element (2), a second pinion (12) driving the third element (3) being formed directly in the shaft (10), and on the other hand the fixed plate (8) is rigidly connected to the frame (B) of the engine.

7. Angular speed reduction device according to any one of the preceding claims, **characterised in that** the teeth of the pinions (11, 12) of the first element (1) are different.

8. Angular speed reduction device according to any one of claims 1 to 4, **characterised in that** the first element (1) is composed of the shaft of the engine in which is formed a single pinion (11) simultaneously driving the second element (2) and the third element (3).

9. Angular speed reduction device according to claims 1 to 6 and 8, **characterised in that** the pinions (11, 12), planetary gears (20, 30) and ring gears (4, 5) have the same module.

10. Angular speed reduction device according to any one of the preceding claims, **characterised in that** the teeth of the two ring gears (4, 5) are different.

11. Angular speed reduction device according to any one of the preceding claims, **characterised in that** one of the two ring gears (4, 5) is fixed on the inside of the ring gear (4, 5) comprising a skirt, with the aid of at least one pin (45) or at least one screw inserted parallel or perpendicularly to the shaft (10) of the first element (1).

12. Angular speed reduction device according to any one of the preceding claims, **characterised in that** the end pieces (21, 31) acting as the axes of the planetary gears (20, 30) of the second (2) and third (3) elements comprise a groove (G) in a plane perpendicular to the axis of symmetry of the planetary gear, an O-ring (J) being designed to be inserted in this groove so that the connection between the axis (21, 31) of each planetary gear (20, 30) and the corresponding plate (8, 9) is tight while ensuring free rotation in the plate of the planetary gear about its axis.

13. Angular speed reduction device according to any one of the preceding claims, **characterised in that** the guide tube (7) comprises at one end at least one shoulder (70), ensuring maintenance of the fixed plate (8) and allowing the guide tube (7) to be fixed to the frame (B) or the flange of the engine with the aid of at least one screw or pin (71).

14. Angular speed reduction device according to any one of the preceding claims, **characterised in that** the components (1, 2, 3, 4, 5, 6, 8, 9) of the device as well as the frame (B) of the engine are inserted in the guide tube (7).

15. Angular speed reduction device according to any one of the preceding claims, **characterised in that** the output plate (6) comprises a second end piece (61) acting as the output axis, the first and second end pieces being aligned and positioned on either side of the output plate (6), the second end piece (61) being designed to be inserted in the shaft (10) of the first element (1), said shaft being hollow and having an inside diameter greater than the diameter of the second end piece (61) so that the latter is freely rotatable at the angular speed W_{O3}.
